# EUROPEAN PATENT APPLICATION

(11) **EP 4 542 724 A1**
(43) Date of publication of application: **23.04.2025**
(21) Application number: 24181212.2
(22) Date of filing: 10.06.2024
(51) Int. Cl.: H01M 10/44, H01M 10/48, H02J 7/00, H01M 10/42, H01M 10/0525

(54) **BATTERY DISCHARGE APPARATUS, BATTERY DISCHARGE SYSTEM, AND BATTERY DISCHARGE METHOD**

(30) Priority: 17.10.2023 KR 20230138944; 07.05.2024 KR 20240060126
(71) Applicant: Korea Institute of Industrial Technology, Cheonan-si, Chungcheongnam-do 31056 (KR)
(72) Inventor: KIM, Won Gun, 55057 Jeonju-si (KR); KO, Jong Wan, 51499 Changwon-si (KR); LEE, Seung Min, 51019 Gimhae-si (KR)
(74) Representative: Marks & Clerk LLP

(57) **Abstract**

Provided is a battery discharge apparatus, battery discharge system, and battery discharge method which uses a battery as a power source for reverse potential discharge. The battery discharge apparatus includes a discharge processor electrically connected to a first target battery and a second target battery to discharge the first and second target batteries, a first battery loader loaded with the first target battery to electrically connect the first target battery to the discharge processor, and a second battery loader loaded with the second target battery to electrically connect the second target battery to the discharge processor, and the first target battery is discharged by reverse potential discharge using the second target battery.

## Description

### CROSS-REFERENCE TO RELATED PATENT APPLICATION

This application claims the benefit of Korean Patent Applications No. 10-2023-0138944, filed on October 17, 2023 and No. 10-2024-0060126, filed on May 7, 2024, in the Korean Intellectual Property Office, the disclosure of which is incorporated herein in its entirety by reference.

### BACKGROUND OF THE INVENTION

### 1. Field of the Invention

<0001> The present invention relates to battery discharge and, more particularly, to a battery discharge apparatus, battery discharge system, and battery discharge method which uses a battery as a power source for reverse potential discharge.

### 2. Description of the Related Art

<0002> In general, demand for rechargeable batteries (or secondary batteries) such as lithium-ion batteries has increased with the popularization of portable devices such as cellular phones, smartphones, and mobile devices, and is expected to increase exponentially due to the application to electric vehicles. Electric and hybrid electric vehicles are regarded as next-generation transportations, and the production thereof is expected to increase rapidly. Therefore, the shortage of lithium-ion batteries for providing power to the electric vehicles may become serious. To compensate for the shortage, a method of collecting battery resources by recycling used waste batteries or defective batteries found during production needs to be considered.

<0003> When batteries are recycled, the batteries need to be discharged as fully as possible to ensure safety. An existing electrical-load-based discharge method is inefficient because high-priced equipment is required for load control. In addition, because waste batteries not only supply very high direct current but also have different amounts of residual electricity, the existing electrical-load-based discharge method may cause a big explosion with a strong spark in a discharge process.

<0004> As an alternative, a method of fully discharging a battery cell by immersing the same in salt water is used. Specifically, according to the existing method of fully discharging a battery cell by immersing the same in salt water, a waste battery cell is discharged by preparing salt water, opening a vent of the waste battery cell, removing a cap of the waste battery cell, and then immersing the battery cell in the salt water. However, using the above method, battery cells may not be easily discharged in large quantities and a long time of about 3 to 7 days is taken.

<0005> Furthermore, although defective battery cells found during production are typically discarded or recycled after being discharged, some defective battery cells are released as commercial products after being illegally discharged or without being discharged, and thus a solution to the above problem is being sought.

### SUMMARY OF THE INVENTION

<0006> The present invention provides a battery discharge apparatus, battery discharge system, and battery discharge method which uses a battery as a power source for reverse potential discharge.

<0007> However, the scope of the present invention is not limited thereto.

<0008> According to an aspect of the present invention, there is provided a battery discharge apparatus including a discharge processor electrically connected to a first target battery and a second target battery to discharge the first and second target batteries, a first battery loader loaded with the first target battery to electrically connect the first target battery to the discharge processor, and a second battery loader loaded with the second target battery to electrically connect the second target battery to the discharge processor, wherein the first target battery is discharged by reverse potential discharge using the second target battery.

<0009> By the reverse potential discharge, the first target battery may be discharged to have a reverse potential voltage with a polarity opposite to the polarity of a state of charge voltage.

<0010> The second target battery may be discharged by reverse potential discharge using a third target battery replaced into the first battery loader.

<0011> By the reverse potential discharge, the second target battery may be discharged to have a reverse potential voltage with a polarity opposite to the polarity of a state of charge voltage.

<0012> The discharge processor may include a first electrode member, a second electrode member disposed to face the first electrode member, and an electrolyte in which the first and second electrode members are immersed.

<0013> The discharge processor may further include a separator disposed between the first and second electrode members to divide the electrolyte.

<0014> The electrolyte may include salt water.

<0015> The battery discharge apparatus may further include a switch disposed to electrically connect or disconnect between the discharge processor, the first battery loader, and the second battery loader.

<0016> The battery discharge apparatus may further include a first voltmeter electrically connected to the first battery loader to measure a voltage of the first target battery, and a second voltmeter electrically connected to the second battery loader to measure a voltage of the second target battery.

<0017> At least one of the first and second target batteries may include a battery cell, a battery module, a battery assembly, a battery pack, or a battery rack.

<0018> According to another aspect of the present invention, there is provided a battery discharge method using a battery discharge apparatus including a discharge processor electrically connected to a first target battery and a second target battery to discharge the first and second target batteries, a first battery loader loaded with the first target battery to electrically connect the first target battery to the discharge processor, and a second battery loader loaded with the second target battery to electrically connect the second target battery to the discharge processor, wherein the first target battery is discharged by reverse potential discharge using the second target battery.

<0019> By the reverse potential discharge, the first target battery may be discharged to have a reverse potential voltage with a polarity opposite to the polarity of a state of charge voltage.

<0020> The second target battery may be discharged by reverse potential discharge using a third target battery replaced into the first battery loader.

<0021> By the reverse potential discharge, the second target battery may be discharged to have a reverse potential voltage with a polarity opposite to the polarity of a state of charge voltage.

<0022> Discharge may be performed by alternately loading target batteries into the first and second battery loaders.

<0023> When the first target battery is loaded first and primarily discharged, power of the second target battery which is loaded later may be higher than the power of the first target battery and, when the second target battery is loaded first and primarily discharged, power of the first target battery which is loaded later may be higher than the power of the second target battery.

<0024> When the first target battery is loaded first and primarily discharged, a voltage of the second target battery which is loaded later may be higher than the voltage of the first target battery and, when the second target battery is loaded first and primarily discharged, a voltage of the first target battery which is loaded later may be higher than the voltage of the second target battery.

<0025> According to another aspect of the present invention, there is provided a battery discharge method for discharging target batteries connected to each other in series, by electrically connecting the target batteries to a discharge processor including a first electrode member, a second electrode member, and an electrolyte in which the first and second electrode members are immersed, wherein the battery discharge method including electrically connecting a first electrode of one of the target batteries to the first electrode member, and electrically connecting a second electrode of another of the target batteries to the second electrode member, wherein one of the target batteries has a voltage higher or lower than the voltage of another to provide a voltage difference.

<0026> The battery discharge method may further include removing one of the target batteries when the target battery is completely discharged, while a target battery which is not completely discharged remains, and disposing a new target battery to be electrically connected in the same manner that the removed target battery is electrically connected to the remaining target battery and the discharge processor before being removed, wherein the new target battery has a voltage higher than the voltage of the remaining target battery.

<0027> According to another aspect of the present invention, there is provided a battery discharge system including a battery discharge apparatus including a discharge processor electrically connected to a first target battery and a second target battery to discharge the first and second target batteries, a first battery loader loaded with the first target battery to electrically connect the first target battery to the discharge processor, and a second battery loader loaded with the second target battery to electrically connect the second target battery to the discharge processor, wherein the first target battery is discharged by reverse potential discharge using the second target battery, an electrolyte concentration adjuster for providing electrolyte components to the discharge processor to adjust a concentration of an electrolyte of the discharge processor, a gas collector for collecting a gas produced in the discharge processor, an expeller for expelling the electrolyte of the discharge processor or a discharge product to outside, a temperature measurer for measuring a temperature of the battery discharge apparatus, and a controller for controlling operation of at least one of the battery discharge apparatus, the electrolyte concentration adjuster, the gas collector, the expeller, and the temperature measurer.

### BRIEF DESCRIPTION OF THE DRAWINGS

<0028> The above and other features and advantages of the present invention will become more apparent by describing in detail embodiments thereof with reference to the attached drawings in which:
FIG. 1 is a block diagram of a battery discharge system according to an embodiment of the present invention;
FIG. 2 is a schematic diagram of a battery discharge apparatus according to an embodiment of the present invention; and
FIGS. 3 to 12 are schematic diagrams for describing a battery discharge method using a battery discharge apparatus, according to an embodiment of the present invention.

### DETAILED DESCRIPTION OF THE INVENTION

<0032> Hereinafter, the present invention will be described in detail by explaining embodiments of the invention with reference to the attached drawings. The invention may, however, be embodied in many different forms and should not be construed as being limited to the embodiments set forth herein; rather, these embodiments are provided so that this disclosure will be thorough and complete, and will fully convey the concept of the invention to one of ordinary skill in the art. Like reference numerals refer to like elements throughout. Further, various elements and regions in the drawings are schematically illustrated. Therefore, the scope of the present invention is not limited by the relative sizes or distances shown in the attached drawings.

<0033> As used herein, a "battery" may include a battery cell which refers to a unit of battery, a battery module obtained by modularizing one or more battery cells, a battery assembly obtained by assembling a certain number of battery cells into a frame to protect them from external impact, heat, and vibration, a battery pack obtained by combining a plurality of battery modules, or a battery rack obtained by combining a plurality of battery packs. The battery pack may be directly loaded with battery cells without forming battery modules, and the battery module is the final form of a battery system mounted in an electric vehicle and may be provided with various control and protection systems such as a battery management system (BMS) and a cooling system. The battery may also include a used waste battery or a defective battery found during production.

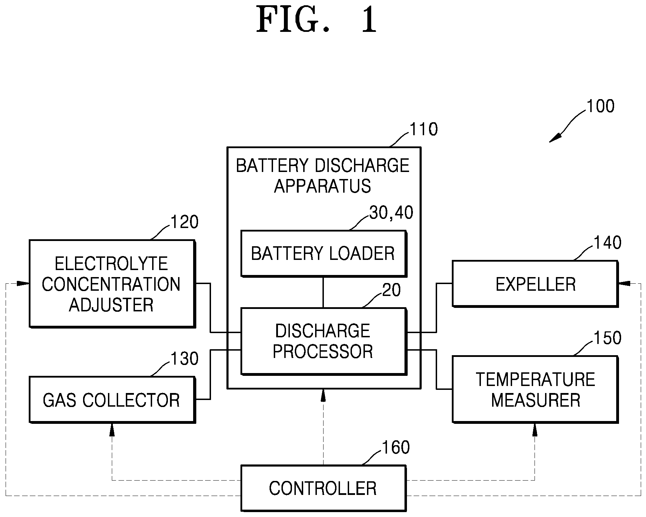

<0034> FIG. 1 is a block diagram of a battery discharge system 100 according to an embodiment of the present invention.

<0035> Referring to FIG. 1, the battery discharge system 100 may include a battery discharge apparatus 110, an electrolyte concentration adjuster 120, a gas collector 130, an expeller 140, a temperature measurer 150, and a controller 160.

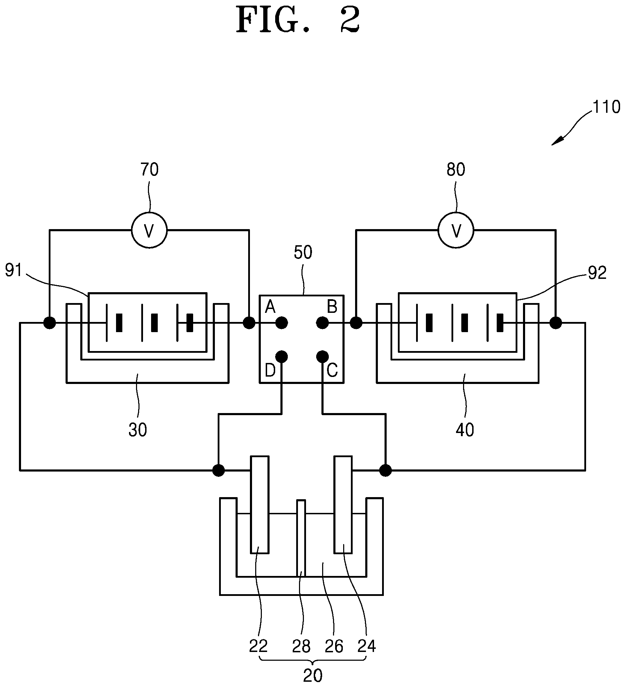

<0036> The battery discharge apparatus 110 may discharge batteries and include a discharge processor 20 and battery loaders 30 and 40. The battery discharge apparatus 110 will be described in detail below with reference to FIG. 2.

<0037> The electrolyte concentration adjuster 120 may provide electrolyte components such as a solute and a solvent to the discharge processor 20 to adjust a concentration of an electrolyte of the discharge processor 20 of the battery discharge apparatus 110. For example, when the concentration of the solute of the electrolyte is below a reference value, the electrolyte concentration adjuster 120 may supply a solid solute such as salt or a liquid solute such as salt water. On the other hand, when the concentration of the solute of the electrolyte is above the reference value, the electrolyte concentration adjuster 120 may supply a solvent such as water. Alternatively, when a volume of the electrolyte is below a reference value, the electrolyte concentration adjuster 120 may supply the electrolyte. To adjust the concentration of the electrolyte as described above, the electrolyte concentration adjuster 120 may include a concentration sensor for measuring the concentration of the solute. As described above, the concentration of the electrolyte may be adjusted by providing the solute or the solvent.

<0038> The gas collector 130 may collect a gas such as chlorine gas, oxygen gas, or hydrogen gas produced in the discharge processor 20, and thus the gas from the discharge processor 20 may be expelled to the outside.

<0039> The expeller 140 may expel the electrolyte of the discharge processor 20 or a discharge product to the outside. The expeller 140 may expel sodium hydroxide to the outside as the discharge product produced by the discharge process. To this end, the expeller 140 may include a concentration sensor such as a sodium hydroxide concentration sensor.

<0040> The temperature measurer 150 may measure a temperature of the battery discharge apparatus 110. The temperature measurer 150 may measure, for example, a temperature of the electrolyte of the discharge processor 20 or a temperature of a target battery to be discharged. The measured temperature information may be transmitted to the controller 160. By measuring and responding to the temperature of each part in the battery discharge process by using the temperature measurer 150, the risk of fire due to overdischarge may be reduced.

<0041> The controller 160 may control operation of at least one of the battery discharge apparatus 110, the electrolyte concentration adjuster 120, the gas collector 130, the expeller 140, and the temperature measurer 150. For example, the controller 160 may control switching for the discharge operation of the discharge processor 20 of the battery discharge apparatus 110. To maintain the concentration of the electrolyte, the controller 160 may control the electrolyte concentration adjuster 120 to provide the solvent or the solute to the discharge processor 20 or control the expeller 140 to expel the electrolyte from the discharge processor 20. In addition, the controller 160 may control the gas collector 130 to appropriately collect the produced gas. The controller 160 may receive the temperature information from the temperature measurer 150, and generate an alert signal to stop the operation of the battery discharge apparatus 110 or perform a switching operation to turn off the battery discharge apparatus 110, when the temperature measured by the temperature measurer 150 is above a reference value.

<0042> FIG. 2 is a schematic diagram of the battery discharge apparatus 110 according to an embodiment of the present invention.

<0043> Referring to FIG. 2, the battery discharge apparatus 110 includes the discharge processor 20, a first battery loader 30, a second battery loader 40, a switch 50, a first voltmeter 70, and a second voltmeter 80.

<0044> The discharge processor 20 may be electrically connected to a first target battery 91 and a second target battery 92 to discharge the first and second target batteries 91 and 92. Specifically, an anode and a cathode of each of the first and second target batteries 91 and 92 may be electrically connected to the discharge processor 20.

<0045> The discharge processor 20 may include a first electrode member 22, a second electrode member 24 disposed to face the first electrode member 22, and an electrolyte 26 in which the first and second electrode members 22 and 24 are immersed. Optionally, the discharge processor 20 may include a separator 28 disposed between the first and second electrode members 22 and 24 to divide the electrolyte 26.

<0046> The first and second electrode members 22 and 24 may include a conductive material and made of various metals including, for example, nickel, titanium, copper, aluminum, and iron. The first and second electrode members 22 and 24 may have various shapes, for example, a flat panel shape, a polygonal shape, a pillar shape, a horn shape, or a mesh shape. Current may increase depending on a surface area where the first and second electrode members 22 and 24 are in contact with the electrolyte 26. Each of the first and second electrode members 22 and 24 may include a plurality of electrode members. One of the first and second electrode members 22 and 24 may be referred to as an anode and the other may be referred to as a cathode depending on polarities thereof.

<0047> The electrolyte 26 may include various conductive materials and be provided as a liquid or a solid. The electrolyte 26 may include, for example, salt water (or NaCl aqueous solution). The salt water may have a concentration ranging from 1 wt% to 10 wt%. When the electrolyte 26 is salt water, the salt water may be decomposed into chlorine, hydrogen, oxygen, sodium hydroxide, etc. in the discharge process. However, the above-mentioned material of the electrolyte 26 is an example, and the electrolyte 26 may include any electrolytic material capable of causing battery discharge.

<0048> The separator 28 may separate the first and second electrode members 22 and 24 from each other and serve as a catalyst to move ions formed by electrolysis of the electrolyte 26 in the discharge process. The separator 28 may be made of various materials and include, for example, a fluorine-based sulfonated polymer or a fluoropolymer.

<0049> The first battery loader 30 may be loaded with the first target battery 91 to electrically connect the first target battery 91 to the discharge processor 20. The first battery loader 30 may be configured to be electrically connected to the first target battery 91 when the first target battery 91 is loaded. The first battery loader 30 may be electrically connected to the discharge processor 20 by a wire cable including a connecting member such as tongs.

<0050> The second battery loader 40 may be loaded with the second target battery 92 to electrically connect the second target battery 92 to the discharge processor 20. The second battery loader 40 may be configured to be electrically connected to the second target battery 92 when the second target battery 92 is loaded. The second battery loader 40 may be electrically connected to the discharge processor 20 by a wire cable including a connecting member such as tongs.

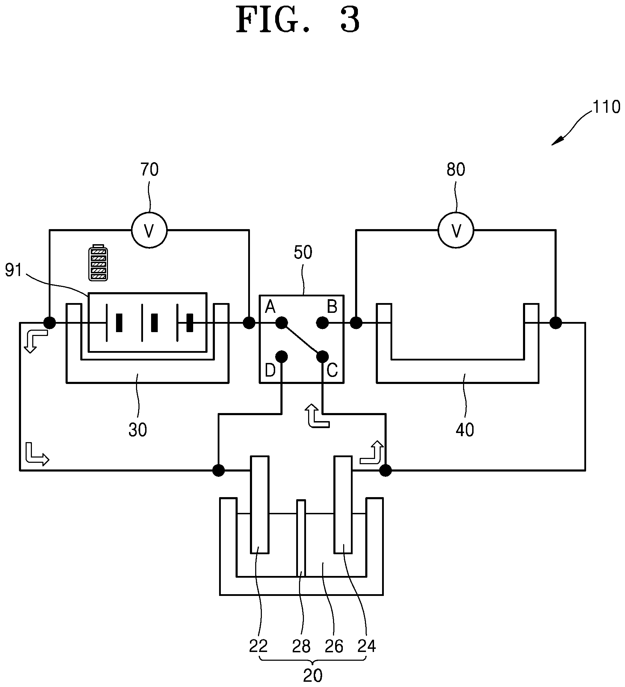

<0051> The switch 50 may be disposed to electrically connect or disconnect between the discharge processor 20, the first battery loader 30, and the second battery loader 40. The operation of the switch 50 may be controlled by the controller 160. The operation of the switch 50 will be described in detail below with reference to FIGS. 3 to 12.

<0052> The first voltmeter 70 may be electrically connected to the first battery loader 30 to measure a voltage of the first target battery 91. The first voltmeter 70 may be configured to measure and indicate the voltage in real time.

<0053> The second voltmeter 80 may be electrically connected to the second battery loader 40 to measure a voltage of the second target battery 92. The second voltmeter 80 may be configured to measure and indicate the voltage in real time.

<0054> States of discharge of the first and second target batteries 91 and 92 may be directly checked using the first and second voltmeters 70 and 80, the discharge process may be performed in units of battery packs or battery racks, and thus the number of waste batteries discharged per unit time may be increased.

<0055> The first target battery 91 may be discharged by reverse potential discharge using the second target battery 92. The reverse potential discharge will be described in detail below.

<0056> Each of the first and second target batteries 91 and 92 may include one or more batteries which are connected to each other in series or in parallel to form an assembly. As such, each of the first and second battery loaders 30 and 40 may be configured to be loaded with one or more batteries.

<0057> At least one of the first and second target batteries 91 and 92 may include a battery cell, a battery module, a battery assembly, a battery pack, or a battery rack.

<0058> The first target battery 91 may be discharged by reverse potential discharge using the second target battery 92. By the reverse potential discharge, the first target battery 91 may be discharged to have a reverse potential voltage with a polarity opposite to the polarity of a state of charge voltage.

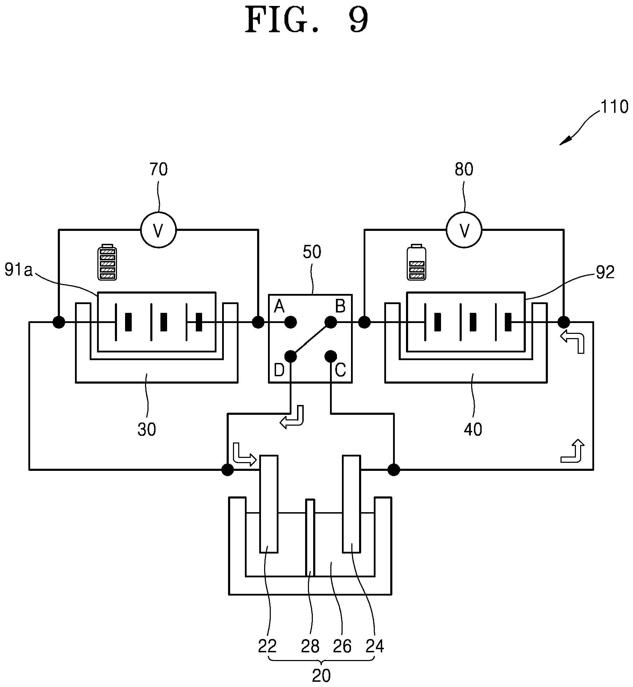

<0059> The second target battery 92 may be discharged by reverse potential discharge using the first target battery 91. For example, the second target battery 92 may be discharged by reverse potential discharge using a third target battery 91a (see FIG. 9) replaced into the first battery loader 30. By the reverse potential discharge, the second target battery 92 may be discharged to have a reverse potential voltage with a polarity opposite to the polarity of a state of charge voltage.

<0060> An operating method of the discharge processor 20 filled with salt water as an electrolyte will now be described. However, the above description is an example, and the scope of the present invention is not limited thereto.

<0061> When at least one of the first and second target batteries 91 and 92 is discharged, (-) ions such as chloride ions Cl(-) and hydroxide ions OH(-) are attracted to the first electrode member 22 serving as the (+) electrode of the discharge processor 20. The chloride ions, which easily lose electrons, lose electrons to produce chlorine gas (Cl2), and the hydroxide ions remain in the electrolyte. The chlorine gas may be expelled from the discharge processor 20 and collected by the gas collector 130 or the like.

<0062> On the other hand, (+) ions such as hydrogen ions H(+) and sodium ions Na(+) are attracted to the second electrode member 24 serving as the (-) electrode of the discharge processor 20. The hydrogen ions, which easily gain electrons, gain electrons to produce hydrogen gas (H₂), and the sodium ions remain in the electrolyte. The hydrogen gas may be expelled from the discharge processor 20 and collected by the gas collector 130 or the like. The remaining hydroxide and sodium ions may form sodium hydroxide and be expelled to the outside by the expeller 140 or the like.

<0063> The reverse potential discharge refers to a method of discharging a target battery by electrically connecting electrodes with opposite polarities to those used when the battery is charged. The reverse potential discharge may discharge the target battery to a very low level so as not to be rechargeable later.

<0064> Specifically, the reverse potential discharge is performed by connecting an anode of the target battery to a cathode of the discharge processor 20 and a cathode of the target battery to an anode of the discharge processor 20. The reverse potential discharge may efficiently discharge or defunctionalize the target battery.

<0065> When the reverse potential discharge is performed by connecting target batteries to each other without connecting a load thereto, there is a risk of explosion. When a power converter for performing the reverse potential discharge is used, the converter itself is high-priced and has a complicated configuration. According to the present invention, because the salt-water-based discharge processor 20 is used, the target batteries may be discharged efficiently and economically. At this time, because the discharge processor 20 may serve as a load in the discharge process, high stability may be provided.

<0066> By the reverse potential discharge, the target battery may be discharged to a level of a reverse potential voltage. The reverse potential voltage may be a voltage with a polarity opposite to that of a discharge completion voltage of the target battery. The reverse potential voltage may have the same absolute value as the discharge completion voltage. For example, the discharge completion voltage of the target battery may be +10V and the reverse potential voltage may be -10V. However, the above-mentioned values are examples, and the scope of the present invention is not limited thereto.

<0067> FIGS. 3 to 12 are schematic diagrams for describing a battery discharge method using the battery discharge apparatus 110, according to an embodiment of the present invention.

<0068> Referring to FIG. 3, the first target battery 91 is loaded into the first battery loader 30. Then, when the switch 50 connects node A and node C, a first current path is formed as indicated by arrows. Through the first current path, the first target battery 91 may supply power to the discharge processor 20 to primarily discharge the first target battery 91.

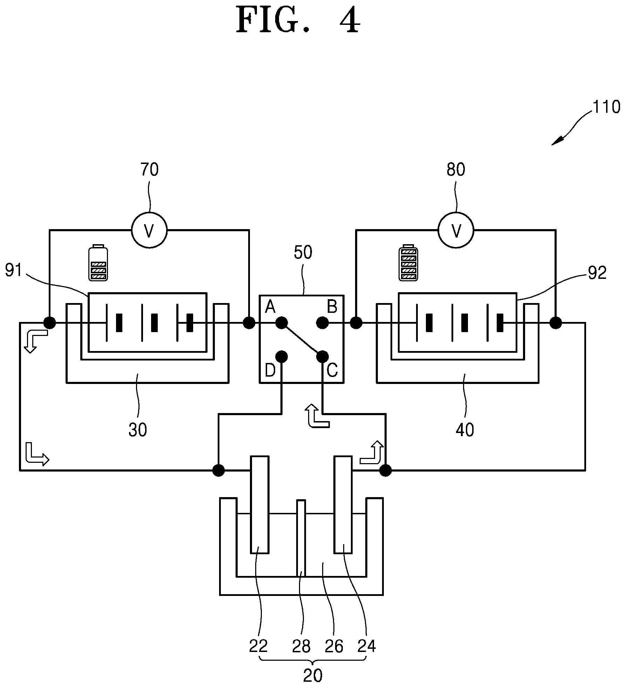

<0069> Referring to FIG. 4, while the first target battery 91 is being primarily discharged, the second target battery 92 is loaded into the second battery loader 40. Because the switch 50 has connected node A and node C, the first current path is maintained and the first target battery 91 supplies power to the discharge processor 20. On the other hand, the second target battery 92 does not yet supply power to the discharge processor 20.

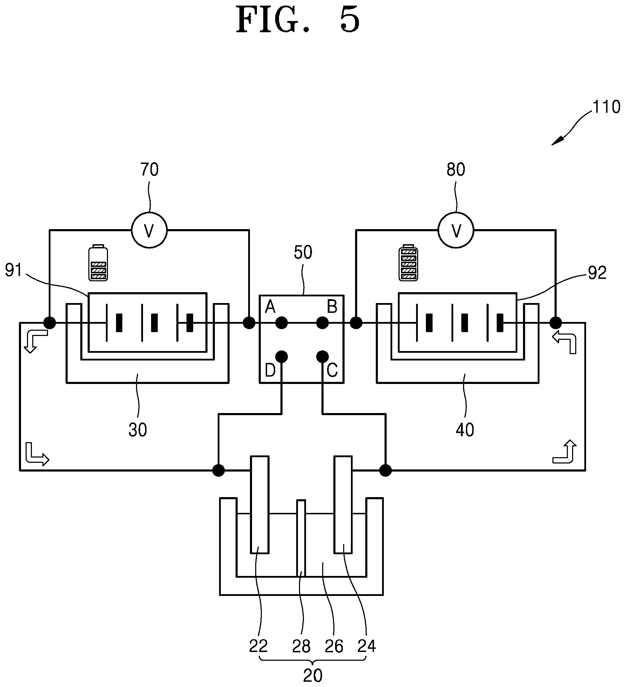

<0070> Referring to FIG. 5, the switch 50 connects node A and node B and thus a second current path is formed as indicated by arrows. At this time, the first and second target batteries 91 and 92 may be connected to each other in series. Through the second current path, the first and second target batteries 91 and 92 may together supply power to the discharge processor 20 to secondarily discharge the first target battery 91 and primarily discharge the second target battery 92. The second target battery 92 may serve as power for discharging the first target battery 91, and thus the discharge of the first target battery 91 may be accelerated.

<0071> Power of the first target battery 91 may be lower than the power of the second target battery 92. Alternatively, a voltage of the first target battery 91 may be lower than the voltage of the second target battery 92.

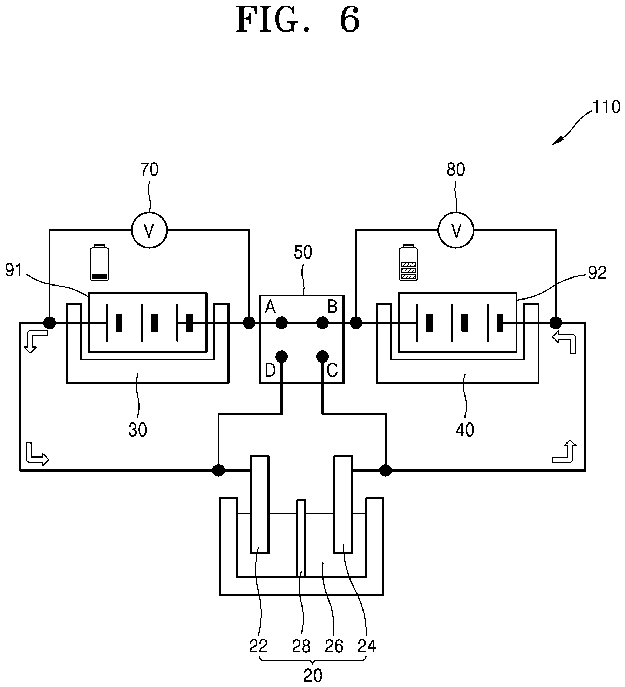

<0072> Referring to FIG. 6, a state in which the first target battery 91 is completely discharged is shown. The discharge completion of the first target battery 91 may be determined based on a voltage measured by the first voltmeter 70. A case in which the discharge completion of the first target battery 91 is determined based on remaining power is also included in the scope of the present invention.

<0073> The voltage for determining the discharge completion of the first target battery 91 may have a variety of ranges. The voltage for determining the discharge completion may range from 5% to 15% and may be, for example, about 10% based on, for example, a discharge start voltage. For example, when a cell has a discharge start voltage ranging from 3.5V to 4V, the voltage for determining the discharge completion may range from 0.1 V to 0.6V and, more specifically, 0.18V to 0.6V, and may be, for example, 0.3V.

<0074> Because a reverse potential is provided to the first target battery 91 by the second target battery 92, the first target battery 91 may be discharged to have a certain voltage, e.g., 0V, and further discharged to have a reverse potential voltage with a polarity opposite to the polarity of a state of charge voltage.

<0075> When the second target battery 92 is loaded and the power of the first target battery 91 is lower than the power of the second target battery 92, the power of the first target battery 91 is almost exhausted by the discharge process and some of the power of the second target battery 92 remains.

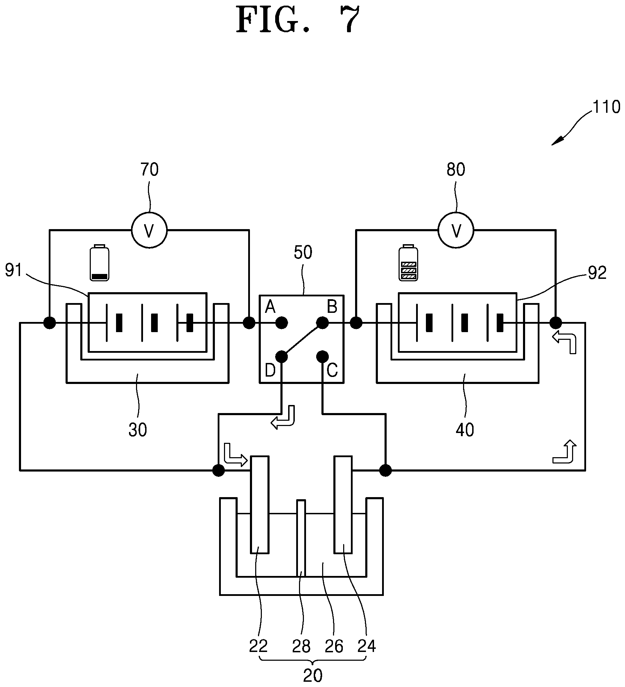

<0076> Referring to FIG. 7, when the switch 50 connects node B and node D, a third current path is formed as indicated by arrows. Through the third current path, the second target battery 92 supplies power to the discharge processor 20 and the first target battery 91 is short-circuited and thus does not supply power to the discharge processor 20.

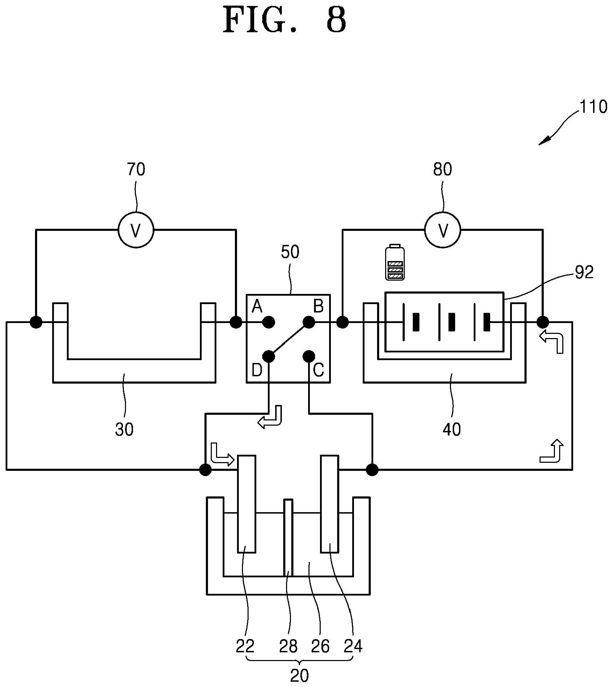

<0077> Referring to FIG. 8, the completely discharged first target battery 91 is detached from the first battery loader 30.

<0078> Referring to FIG. 9, while the second target battery 92 is being primarily discharged, a third target battery 91a is loaded into the first battery loader 30 as a new target battery. Because the switch 50 has connected node B and node D, the third current path is maintained and the second target battery 92 supplies power to the discharge processor 20. On the other hand, the third target battery 91a does not yet supply power to the discharge processor 20.

<0079> Herein, the third target battery 91a refers to a target battery replaced into the first battery loader 30 following the first target battery 91.

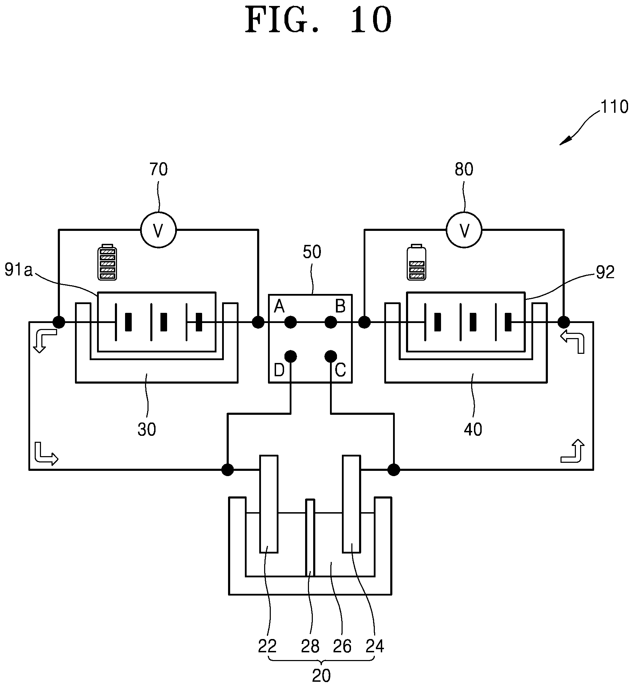

<0080> Referring to FIG. 10, the switch 50 connects node A and node B and thus the second current path is formed as indicated by arrows. The second current path is the same as the second current path of FIG. 5. At this time, the third and second target batteries 91a and 92 may be connected to each other in series. Through the second current path, the third and second target batteries 91a and 92 may together supply power to the discharge processor 20 to primarily discharge the third target battery 91a and secondarily discharge the second target battery 92. The third target battery 91a may serve as power for discharging the second target battery 92, and thus the discharge of the second target battery 92 may be accelerated.

<0081> Power of the third target battery 91a may be higher than the power of the second target battery 92. Alternatively, a voltage of the third target battery 91a may be higher than the voltage of the second target battery 92.

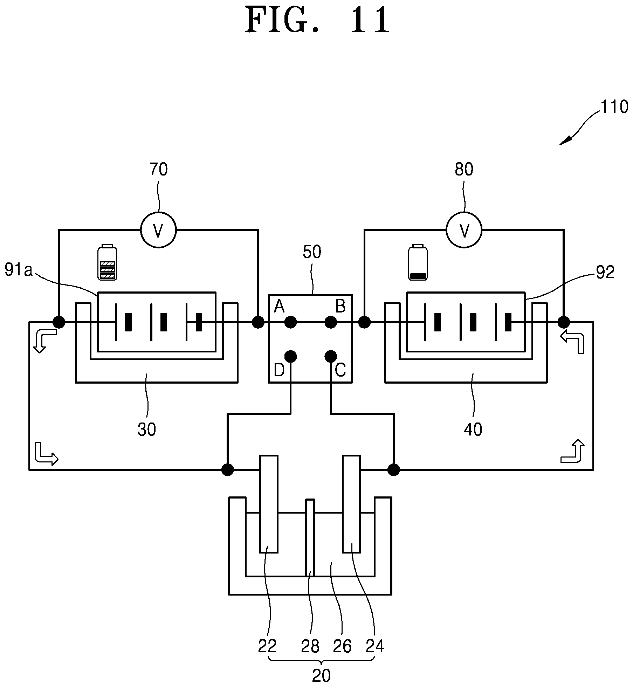

<0082> Referring to FIG. 11, a state in which the second target battery 92 is completely discharged is shown. The discharge completion of the second target battery 92 may be determined based on a voltage measured by the second voltmeter 80. A case in which the discharge completion of the second target battery 92 is determined based on remaining power is also included in the scope of the present invention.

<0083> The voltage for determining the discharge completion of the second target battery 92 may have a variety of ranges. The voltage for determining the discharge completion may range from 5% to 15% and may be, for example, about 10% based on, for example, a discharge start voltage. For example, when a cell has a discharge start voltage ranging from 3.5V to 4V, the voltage for determining the discharge completion may range from 0.1V to 0.6V and, more specifically, 0.18V to 0.6V, and may be, for example, 0.3V.

<0084> Because a reverse potential is provided to the second target battery 92 by the third target battery 91a, the second target battery 92 may be discharged to have a certain voltage, e.g., 0V, and further discharged to have a reverse potential voltage with a polarity opposite to the polarity of a state of charge voltage.

<0085> When the third target battery 91a is loaded and the power of the second target battery 92 is lower than the power of the third target battery 91a, the power of the second target battery 92 is almost exhausted by the discharge process and some of the power of the third target battery 91a remains.

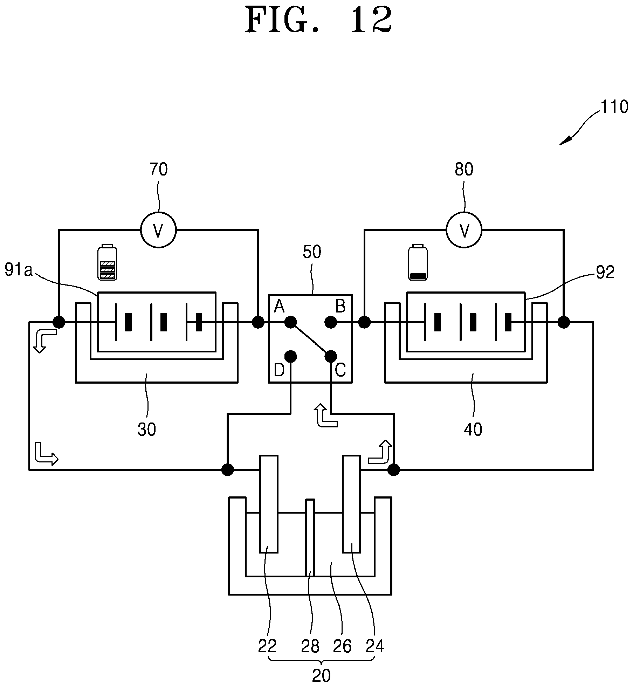

<0086> Referring to FIG. 12, when the switch 50 connects node B and node D, the first current path is formed as indicated by arrows. The first current path is the same as the first current path of FIG. 3. Through the first current path, the third target battery 91a supplies power to the discharge processor 20 and the second target battery 92 is short-circuited and thus does not supply power to the discharge processor 20.

<0087> Then, the completely discharged second target battery 92 is detached from the second battery loader 40. A state in which the second target battery 92 is detached is as shown in FIG. 3.

<0088> Then, a fourth target battery is newly loaded into the second battery loader 40 and the discharge process is continued in the same manner as shown in FIGS. 4 to 12. That is, the discharge process may be continuously performed by alternately loading target batteries into the first and second battery loaders 30 and 40.

<0089> According to the present invention, regardless of whether the first target battery 91 or the second target battery 92 is loaded, power may be continuously supplied to the discharge processor 20 based on a switching operation of the switch 50.

<0090> According to an embodiment of the present invention, a battery discharge method may use a battery discharge apparatus including a discharge processor electrically connected to a first target battery and a second target battery to discharge the first and second target batteries, a first battery loader loaded with the first target battery to electrically connect the first target battery to the discharge processor, and a second battery loader loaded with the second target battery to electrically connect the second target battery to the discharge processor, wherein the first target battery is discharged by reverse potential discharge using the second target battery.

<0091> The second target battery may be discharged by reverse potential discharge using a first target battery replaced into the first battery loader.

<0092> Discharge may be performed by alternately loading the first and second target batteries into the first and second battery loaders.

<0093> When the first target battery is loaded first and primarily discharged, power of the second target battery which is loaded later may be higher than the power of the first target battery.

<0094> When the second target battery is loaded first and primarily discharged, power of the first target battery which is loaded later may be higher than the power of the second target battery.

<0095> By the reverse potential discharge, the first target battery may be discharged to have a reverse potential voltage with a polarity opposite to the polarity of a state of charge voltage.

<0096> By the reverse potential discharge, the second target battery may be discharged to have a reverse potential voltage with a polarity opposite to the polarity of a state of charge voltage.

<0097> According to an embodiment of the present invention, a battery discharge method for discharging target batteries connected to each other in series, by electrically connecting the target batteries to a discharge processor including a first electrode member, a second electrode member, and an electrolyte in which the first and second electrode members are immersed, may include electrically connecting a first electrode of one of the target batteries to the first electrode member, and electrically connecting a second electrode of another of the target batteries to the second electrode member, wherein one of the target batteries has a voltage higher or lower than the voltage of another to provide a voltage difference.

<0098> The battery discharge method may further include removing one of the target batteries when the target battery is completely discharged, while a target battery which is not completely discharged remains, and disposing a new target battery to be electrically connected in the same manner that the removed target battery is electrically connected to the remaining target battery and the discharge processor before being removed, wherein the new target battery has a voltage higher than the voltage of the remaining target battery.

<0099> Based on a battery discharge apparatus, battery discharge system, and battery discharge method according to the present invention, to compensate for the inefficiency of an existing method of discharging battery cells by immersing the battery cells in water, salt-water-based discharge technology for connecting a target battery through electrodes from the outside may be applied and the target battery may be used as a power source for reverse potential discharge, thereby minimizing time and labor for discharge. In addition, the target battery may be defunctionalized through the reverse potential discharge and thus battery recycling may be completely prevented.

<0100> Furthermore, based on the battery discharge apparatus, battery discharge system, and battery discharge method according to the present invention, battery discharge may be performed efficiently and economically because a salt-water-based discharge processor is used, and high stability of discharge may be provided because the discharge processor may serve as a load.

<0101> The battery discharge apparatus, battery discharge system, and battery discharge method according to the present invention may be applied to batteries inside vehicles, energy storage system (ESS), and small mobile electrical devices, and used as the most efficient method to process defective cells in a cell production procedure.

<0102> The above-described effects of the present invention are examples, and the scope of the present invention is not limited thereto.

<0103> While the present invention has been particularly shown and described with reference to embodiments thereof, it will be understood by one of ordinary skill in the art that various changes in form and details may be made therein without departing from the scope of the present invention as defined by the following claims.

## Claims

1. A battery discharge apparatus comprising:
a discharge processor electrically connected to a first target battery and a second target battery to discharge the first and second target batteries;
a first battery loader loaded with the first target battery to electrically connect the first target battery to the discharge processor; and
a second battery loader loaded with the second target battery to electrically connect the second target battery to the discharge processor,
wherein the first target battery is discharged by reverse potential discharge using the second target battery.

2. The battery discharge apparatus of claim 1, wherein, by the reverse potential discharge, the first target battery is discharged to have a reverse potential voltage with a polarity opposite to the polarity of a state of charge voltage.

3. The battery discharge apparatus of claim 1, wherein the second target battery is discharged by reverse potential discharge using a third target battery replaced into the first battery loader.

4. The battery discharge apparatus of claim 3, wherein, by the reverse potential discharge, the second target battery is discharged to have a reverse potential voltage with a polarity opposite to the polarity of a state of charge voltage.

5. The battery discharge apparatus of claim 1, wherein the discharge processor comprises:
a first electrode member;
a second electrode member disposed to face the first electrode member; and
an electrolyte in which the first and second electrode members are immersed.

6. The battery discharge apparatus of claim 5, wherein the discharge processor further comprises a separator disposed between the first and second electrode members to divide the electrolyte.

7. The battery discharge apparatus of claim 5, wherein the electrolyte comprises salt water.

8. The battery discharge apparatus of claim 1, further comprising a switch disposed to electrically connect or disconnect between the discharge processor, the first battery loader, and the second battery loader.

9. The battery discharge apparatus of claim 1, further comprising:
a first voltmeter electrically connected to the first battery loader to measure a voltage of the first target battery; and
a second voltmeter electrically connected to the second battery loader to measure a voltage of the second target battery.

10. The battery discharge apparatus of claim 1, wherein at least one of the first and second target batteries comprises a battery cell, a battery module, a battery assembly, a battery pack, or a battery rack.

11. A battery discharge method using a battery discharge apparatus comprising:
a discharge processor electrically connected to a first target battery and a second target battery to discharge the first and second target batteries;
a first battery loader loaded with the first target battery to electrically connect the first target battery to the discharge processor; and
a second battery loader loaded with the second target battery to electrically connect the second target battery to the discharge processor,
wherein the first target battery is discharged by reverse potential discharge using the second target battery.

12. The battery discharge method of claim 11, wherein, by the reverse potential discharge, the first target battery is discharged to have a reverse potential voltage with a polarity opposite to the polarity of a state of charge voltage.

13. The battery discharge method of claim 11, wherein the second target battery is discharged by reverse potential discharge using a third target battery replaced into the first battery loader.

14. The battery discharge method of claim 13, wherein, by the reverse potential discharge, the second target battery is discharged to have a reverse potential voltage with a polarity opposite to the polarity of a state of charge voltage.

15. The battery discharge method of claim 11, wherein discharge is performed by alternately loading target batteries into the first and second battery loaders.

16. The battery discharge method of claim 11, wherein, when the first target battery is loaded first and primarily discharged, power of the second target battery which is loaded later is higher than the power of the first target battery, and
wherein, when the second target battery is loaded first and primarily discharged, power of the first target battery which is loaded later is higher than the power of the second target battery.

17. The battery discharge method of claim 11, wherein, when the first target battery is loaded first and primarily discharged, a voltage of the second target battery which is loaded later is higher than the voltage of the first target battery, and
wherein, when the second target battery is loaded first and primarily discharged, a voltage of the first target battery which is loaded later is higher than the voltage of the second target battery.

18. A battery discharge method for discharging target batteries connected to each other in series, by electrically connecting the target batteries to a discharge processor comprising a first electrode member, a second electrode member, and an electrolyte in which the first and second electrode members are immersed,
wherein the battery discharge method comprising:
electrically connecting a first electrode of one of the target batteries to the first electrode member; and
electrically connecting a second electrode of another of the target batteries to the second electrode member,
wherein one of the target batteries has a voltage higher or lower than the voltage of another to provide a voltage difference.

19. The battery discharge method of claim 18, further comprising:
removing one of the target batteries when the target battery is completely discharged, while a target battery which is not completely discharged remains; and
disposing a new target battery to be electrically connected in the same manner that the removed target battery is electrically connected to the remaining target battery and the discharge processor before being removed,
wherein the new target battery has a voltage higher than the voltage of the remaining target battery.

20. A battery discharge system comprising:
a battery discharge apparatus comprising a discharge processor electrically connected to a first target battery and a second target battery to discharge the first and second target batteries, a first battery loader loaded with the first target battery to electrically connect the first target battery to the discharge processor, and a second battery loader loaded with the second target battery to electrically connect the second target battery to the discharge processor, wherein the first target battery is discharged by reverse potential discharge using the second target battery;
an electrolyte concentration adjuster for providing electrolyte components to the discharge processor to adjust a concentration of an electrolyte of the discharge processor;
a gas collector for collecting a gas produced in the discharge processor;
an expeller for expelling the electrolyte of the discharge processor or a discharge product to outside;
a temperature measurer for measuring a temperature of the battery discharge apparatus; and
a controller for controlling operation of at least one of the battery discharge apparatus, the electrolyte concentration adjuster, the gas collector, the expeller, and the temperature measurer.
